# EUROPÄISCHE PATENTANMELDUNG

(11) **EP 0 525 542 A2**
(43) Veröffentlichungstag der Anmeldung: **03.02.1993**
(21) Anmeldenummer: 92112227.1
(22) Anmeldetag: 17.07.1992
(51) Int. Cl.: B65D 71/00, B65D 85/04, B65D 57/00

(54) **Mehrweg-Sammelverpackung für gestapelte Wickelrollen**

(30) Priorität: 27.07.1991 DE 9109284 U
(71) Anmelder: BASF Magnetics GmbH, D-68165 Mannheim (DE)
(72) Erfinder: Toral, Jose, W-8000 München 70 (DE); Lutz, Gottfried, W-8031 Seefeld (DE); Thiele, Hartmut, W-8000 München 71 (DE); Liepold, August, W-8000 München 70 (DE); Brandstetter, Hermann, W-8000 München 70 (DE)
(74) Vertreter: Langfinger, Klaus-Dieter, Dr.

(57) **Zusammenfassung**

Quaderförmige Sammelverpackung für vertikal gestapelte Wickelrollen, bestehend aus einer rechteckigen Palette (1), einer auf dieser befindlichen mit einer Vielzahl von Ausnehmungen (2) versehenen rechteckigen Grundplatte (3), einer identisch aufgebauten Zwischenplatte (5) und einer ebenso identischen Deckplatte (6), einer Vielzahl jeweils dazwischen gestapelter wickelrollen (4) und Mittel (7, 8, 9) zur Fixierung der Verpackung und der Wickelrollen, wobei die Wickelrollen bandförmige Aufzeichnungsträger (10) sind, welche auf mit inneren Bohrungen versehene flanschlose Wickelkerne (11) aufgewickelt sind, durch welche eine Kernhülse (8) durchgest eckt wird, welche in den Ausnehmungen (2) der Grund- (3), Zwischen- (5) und Deckplatte (6) verschiebungsfrei gelagert ist und wobei auf das offene Ende der Kernhülse (8) oberhalb der Deckplatte ein mit einem Ring versehener Deckel (9) aufsteckbar ist, wobei die seitlichen vier Kanten der Verpackung durch vertikal angebrachte Eckteile (7) gesichert sind und wobei um die Seitenteile der Verpackung eine Stretchfolie (12) gezogen ist.

## Beschreibung

Die Erfindung betrifft eine quaderförmige Sammelverpackung für vertikal gestapelte Wickelrollen, bestehend aus einer rechteckigen Palette (1), einer auf dieser befindlichen mit einer Vielzahl von Ausnehmungen (2) versehenen rechteckigen Grundplatte (3), einer identisch aufgebauten Zwischenplatte (5) und einer Deckplatte (6), wobei jeweils dazwischen eine Vielzahl von Wickelrollen (4) gestapelt ist und wobei Mittel (7, 8, 9) zur Fixierung der Verpackung und der Wickelrollen vorgesehen sind.

Eine Verpackung der oben genannten gattungsmäßigen Art ist aus der DE 40 16 265 bekannt. Bei dieser Vorrichtung sind die Wickelrollen um einen Rohrkern gewickelt, dessen Enden beiderseits aus dem Wickel hervorstehen und wobei diese Enden in einer Polsterscheibe gelagert sind, die mit einer Vielzahl von Ausnehmungen versehen sind. Diese Ausnehmungen haben im wesentlichen elliptische oder ovale Form, damit die Wickelrollen zur Fixierung in eine bestimmte Position bewegbar sind. Die Wickelrollen werden mit Bindemitteln auf der Palette festgebunden, außerdem sind Zwischenlagen zwischen den miteinander im Kontakt befindlichen Wickelrollen vorgesehen. Die Polsterscheiben bestehen aus mehrschichtiger Hartpappe mit einer Zwischenschicht, die eine wabenförmige Struktur hat, um Festigkeit und Stabilität zu erhalten. Diese Art von Verpackung ist für empfindliche Wickelrollen, wie aufgewickelte Magnetbänder (sogenannte Pancakes), wegen der Gefahr von Beschädigungen ungeeignet. Außerdem ist die geschilderte Art von Verpackung nicht wiederverwendbar.

Magnetband-Sammelverpackungen sind aus den Veröffentlichungen US 3 543 922, US 4 708 246, US 4 955 471, EP 0 320 751, DE-GM 89 00 709, DE-GM 89 12 747 sowie DE-GM 89 12 749 genannt. Diese Verpackungen bestehen entweder aus relativ voluminösem Styropor, was ein an sich nutzloses hohes Transportvolumen bedeutet und welches nach Auspacken des Inhalts entsorgt werden muß oder die Verpackung wird durch Kunststoff-Paletten und Hülsen zusammenehalten, wobei die Hülsen relativ kompliziert aufgebaut sind und wobei teilweise die Seitenteile des Verpakkungsgutes ungenügend geschützt sind, da sie lediglich durch eine über die Verpackung aufgeschrumpfte Folie bedeckt ist. Daher muß diese Verpackung zum Transport noch zusätzlich in einen Außenkarton gesteckt werden.

Deshalb bestand die Aufgabe, eine Verpackung für Pancakes der oben genannten gattungsmäßigen Art zu finden, welche gleichzeitig folgende Bedingungen erfüllt:
- Beschränkung des Anteils der wegzuwerfenden Verpackungsmaterialien auf das geringste nur mögliche Maß
- einfacher Aufbau
- transport- und staubsichere Unterbringung der Pancakes
- einfach zusammenzusetzen und auszupacken
- geringes Volumen beim Rücktransport
- wiederverwendbar
- keine zusätzliche Außenverpackung erforderlich.

Erfindungsgemäß wurde die Aufgabe gelöst mit einer Verpackung mit den im kennzeichnenden Teil des Anspruchs 1 genannten Merkmalen. Weitere Ausgestaltungen der Erfindung gehen aus den Unteransprüchen, den Zeichnungen und der Beschreibung hervor.

Nachstehend wird die Erfindung anhand der Zeichnungen näher erläutert und zwar zeigen:
Figur 1 eine perspektivische Darstellung der neuerungsgemäßen Verpackung
Figuren 2 - 3 die aufeinandergestapelten Einzelteile für den Rücktransport der Verpackungsteile
Figur 4 eine Draufsicht auf ein Zwischenlageblatt
Figur 5 eine Draufsicht auf eine Ausführungsform der kompletten Verpackung mit Zwischenlageblättern gemäß Figur 4.

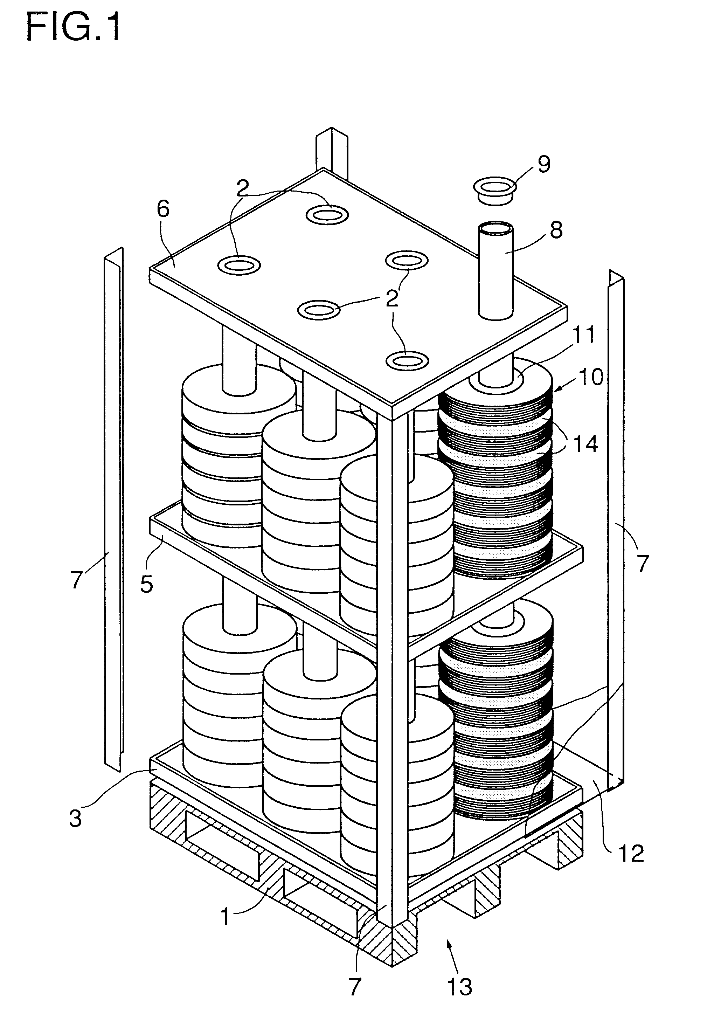

Die Figur 1 stellt den schematischen Aufbau der Verpackung dar. Auf einer üblichen aus Holz, Kunststoff oder Aluminium bestehenden Palette (1) liegt eine quaderförmige aus hartem Kunststoff wie ABS bestehende Grundplatte (3), welche identisch aufgebaut ist wie die Zwischenplatte (5) und die Deckplatte (6). Jede der Platten besitzt regelmäßig angeordnet kreisförmige Ausnehmungen (2) zum Durchstecken von Kernhülsen (8). Die vorzugsweise hohlzylindrisch aufgebauten Kernhülsen besitzen an einer Seite einen (nicht gezeichneten) Sokkel, mit dem sie auf der Palette aufstehen und auf ihrer anderen Seite ein offenes Ende. Auf den Kernhülsen sind Pancakes (10) vertikal aufgereiht. Die Pancakes sind vorzugsweise auf flanschlosen Wickelkernen (11) aufgewickelte Magnetbänder, wobei die Wickelhöhe des Kerns annähernd der Breite des Magnetbandes entspricht. Der flanschlose Wickelkern kann ein sogenannter NAB-Kern sein oder ein Wickelkern gemäß DE 24 48 835, welcher einen Schutz gegen Verdrehen und Verschieben bewirkt. Selbstverständlich sind auch andere flanschlose Wickelkerne geeignet. Jeweils zwischen zwei Pancakes können dünne Kunststoff-Blätter zum Schutz gegen Beschädigungen der Ränder des Magnetbandes eingelegt werden. Nach mehreren Lagen Pancakes, beispielsweise fünf bis sechs Lagen, können jeweils Kunststoff-Scheiben (14), bestehend aus Schaumstoff oder hartem Kunststoff, als Zwischenlage vorgesehen sein.

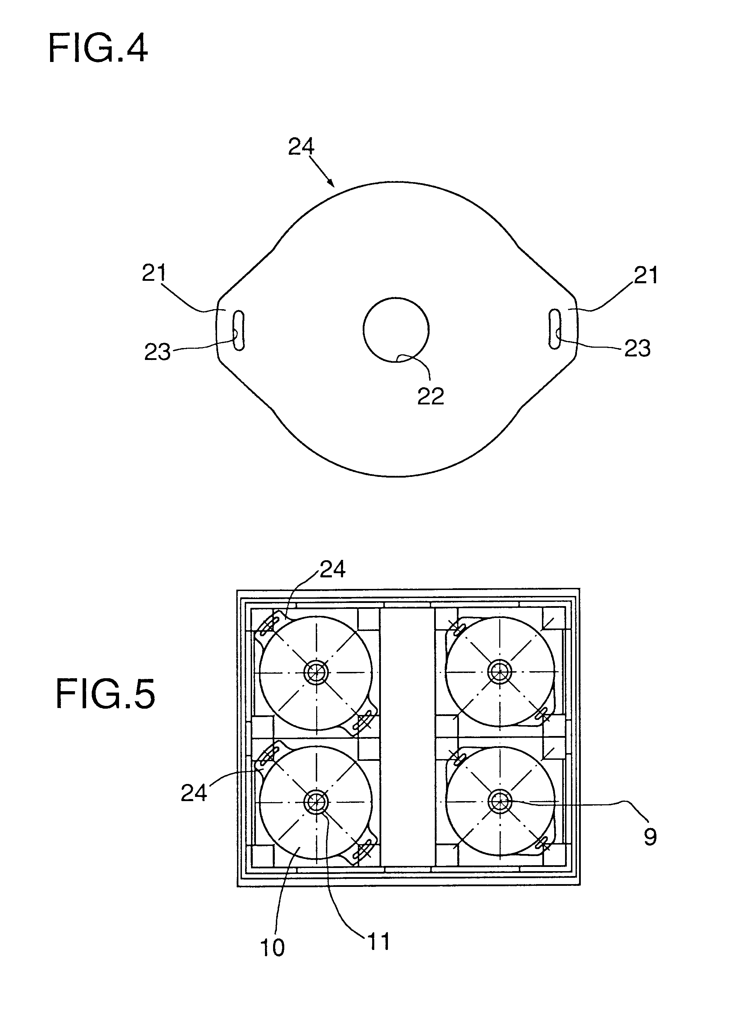

In einer abgeänderten Ausführungsform können die Zwischenlagen (24), wie aus Figur 4 hervorgeht, an zwei gegenüberliegenden Enden Grifflaschen (21) mit schlitzförmigen Eingriffslöchern (23) zum bequemeren Herausheben von mehreren Lagen Pancakes aufweisen. Weiterhin besitzen die Zwischenlagen eine zentrale kreisförmige Ausnehmung (22) zum Aufstecken auf die Kernhülse. Eine mögliche Anordnung dieser Zwischenlageblätter (24), welche aus Polyethylenterephthalat bestehen können, in der kompletten Verpackung geht aus der Figur 5 hervor. In dieser Ausführungsform sind im Gegensatz zu Figur 1 jeweils 4 Stapel Pancakes nebeneinander senkrecht gestapelt angeordnet.

In der halben geometrischen Mitte der Sammelverpackung wird eine Zwischenplatte (5) aufgelegt, dann folgt noch ein Stapel von Pancakes wie oben beschrieben. Von der Größe der Palette und dem Umfang der Pancakes hängt es ab, wieviel Reihen Wickel auf einer Palette bereitgestellt werden.

Ist die volle Palettenhöhe erreicht, wird die Deckplatte (6) aufgelegt und die offenen Enden der Kernhülsen (8) werden mit einem aufsteckbaren Deckel (9) mit Ring gesichert. Dann werden an den vier Ecken der Verpackung vertikale Eckteile (7), deren Länge der Höhe der Verpackung entspricht, aufgesteckt und eine Schutzfolie (12), etwa eine Stretchfolie wird um die Seitenteile der Sammelverpackung gewickelt. Die Eckteile können aus Metall oder Kunststoff bestehen. Auf diese Weise ist der Inhalt der Verpackung zuverlässig beim Transport vor Staub und Schmutz geschützt.

Beim Kunden werden nach Abziehen der Stretchfolie die Eckteile und die Deckplatte entfernt, wonach eine oder mehrere Lagen Pancakes abgenommen werden können sowie nach Abnehmen der Zwischenplatte auch die unteren Lagen Pancakes.

In einem Beispiel werden auf einer Euro-Palette in zwei Reihen auf sechs Kernhülsen insgesamt 360 Pancakes, bestehend aus 1/2-Zoll-Videoband mit 16 Zoll Durchmesser, transportiert. Dabei beträgt das Gewicht der Pancakes rund 700 kg, die zum Rücktransport geeignete Verpackung wiegt cirka 60 kg.

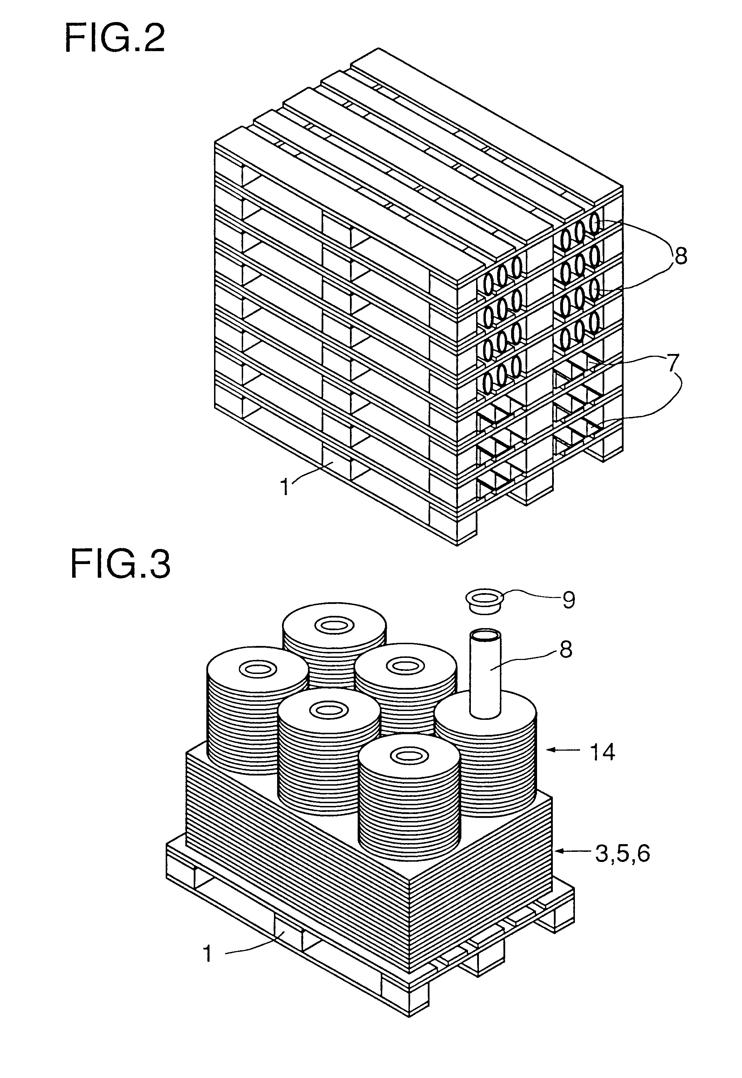

Der Rücktransport des Verpackungsmaterials kann, wie die Figuren 2 und 3 zeigen, in raumsparender Weise erfolgen. So können die Paletten übereinandergestapelt werden, wobei in die Zwischenräume (13) der Unterseite der Paletten die Kernhülsen (8) und die Eckteile (7) eingelegt werden können.

Auf einer anderen Palette können die Grund-, Zwischen- und Deckplatten aufeinandergestapelt rückversandt werden, wobei durch die Ausnehmungen der Platten die Kernhülsen gesteckt werden, um die Platten zu fixieren und wobei, wie die Figur 3 zeigt, im oberen Teil der Rückversand-Packung die aufeinandergestapelten Kunststoffeinlagen beziehungsweise Trennblätter aufgesteckt werden und mit dem Deckel verschlossen werden.

Auf diese Weise werden die gestellten Aufgaben durch die erfindungsgemäße Sammelverpakkung vollständig gelöst.

## Patentansprüche

1. Quaderförmige Sammelverpackung für vertikal gestapelte Wickelrollen, bestehend aus einer rechteckigen Palette (1), einer auf dieser befindlichen mit einer Vielzahl von Ausnehmungen (2) versehenen rechteckigen Grundplatte (3), einer identisch aufgebauten Zwischenplatte (5) und einer ebenso identischen Deckplatte (6), einer Vielzahl jeweils dazwischen gestapelter Wickelrollen (4) und Mittel (7, 8, 9) zur Fixierung der Verpackung und der Wickelrollen, dadurch gekennzeichnet, daß die Wickelrollen bandförmige Aufzeichnungsträger (10) sind, welche auf mit inneren Bohrungen versehene flanschlose Wickelkerne (11) aufgewickelt sind, durch welche eine Kernhülse (8) durchgesteckt wird, welche in den Ausnehmungen (2) der Grund-, (3) Zwischen- (5) und Deckplatte (6) verschiebungsfrei gelagert ist und wobei auf das offene Ende der Kernhülse (8) oberhalb der Deckplatte ein mit einem Ring versehener Deckel (9) aufsteckbar ist, wobei die seitlichen vier Kanten der Verpackung durch vertikal angebrachte Eckteile (7) gesichert sind und wobei um die Seitenteile der Verpackung eine Stretchfolie (12) gezogen ist.

2. Sammelverpackung nach Anspruch 1, dadurch gekennzeichnet, daß zwischen zwei Pancakes (10) jeweils dünne Zwischenlagen eingelegt sind und daß mehrere aufeinandergestapelte Pancakes durch elastische Kunststoffeinlagen (14) beabstandet sind.

3. Sammelverpackung nach Anspruch 2, dadurch gekennzeichnet, daß die elastischen Kunststoffeinlagen (24) an zwei gegenüberliegenden Enden Grifflaschen (21) mit Eingriffsöffnungen (23) zum Abnehmen eines Pancakestapels aufweisen.

4. Sammelverpackung nach Anspruch 1, dadurch gekennzeichnet, daß die Grund-, Deck- und Zwischenplatten sowie die Kernhülse aus Hartkunststoff bestehen.
